# EUROPEAN PATENT SPECIFICATION

(11) **EP 4 094 409 B1**
(45) Date of publication and mention of the grant of the patent: **05.08.2026**
(21) Application number: 21705365.1
(22) Date of filing: 21.01.2021
(51) Int. Cl.: H04L 45/02, H04L 45/00, H04L 45/488

(54) **COMPUTATION OF A NETWORK FLOODING TOPOLOGY**
BERECHNUNG EINER NETZFLUTUNGSTOPOLOGIE
CALCUL D'UNE TOPOLOGIE D'INONDATION DE RÉSEAU

(30) Priority: 24.01.2020 US 202016752245
(43) Date of publication of application: 30.11.2022
(73) Proprietor: Arista Networks, Inc., Santa Clara, CA 95054 (US)
(72) Inventor: CHEN, Yunxia, Santa Clara, California 95054 (US); LI, Anthony Joseph, Santa Clara, California 95054 (US)
(74) Representative: Hoffmann Eitle
(86) International application number: PCT/US2021/014312
(87) International publication number: WO 2021/150678

(56) References cited:
- EP-A1- 3 400 678
- CHEN T LI ARISTA NETWORKS S: "An Algorithm for Computing Dynamic Flooding Topologies; draft-chen-lsr-dynamic-flooding-algorithm-00.txt", 3 March 2020 (2020-03-03), pages 1 - 9, XP015138043, Retrieved from the Internet <URL:https://tools.ietf.org/html/draft-chen-lsr-dynamic-flooding-algorithm-00> [retrieved on 20200303]
- LI T ET AL: "Dynamic Flooding on Dense Graphs; draft-ietf-lsr-dynamic-flooding-04.txt", no. 4, 26 November 2019 (2019-11-26), pages 1 - 47, XP015136693, Retrieved from the Internet <URL:https://tools.ietf.org/html/draft-ietf-lsr-dynamic-flooding-04> [retrieved on 20191126]
- CHEN FUTUREWEI D CHENG INDIVIDUAL M TOY VERIZON Y YANG IBM A WANG CHINA TELECOM X LIU VOLTA NETWORKS Y FAN CASA SYSTEMS L LIU FUJI: "Flooding Topology Computation Algorithm; draft-cc-lsr-flooding-reduction-04.txt", no. 4, 8 July 2019 (2019-07-08), pages 1 - 9, XP015133971, Retrieved from the Internet <URL:https://tools.ietf.org/html/draft-cc-lsr-flooding-reduction-04> [retrieved on 20190708]
- FRANK R ET AL: "EDFS a novel flooding protocol for multi-hop wireless networks", WIRELESS ON-DEMAND NETWORK SYSTEMS AND SERVICES (WONS), 2010 SEVENTH INTERNATIONAL CONFERENCE ON, IEEE, PISCATAWAY, NJ, USA, 3 February 2010 (2010-02-03), pages 99 - 105, XP031652457, ISBN: 978-1-4244-6059-5

## Description

### BACKGROUND

Networks of interconnected devices (e.g., computer networks) often include any number of network devices. Such network devices may be arranged in a network topology in order to provide connectivity between devices within and outside of the network. Within such network topologies, routing protocols are often implemented that distribute certain information, at least in part, by flooding the information (e.g., in packets) from each network device in the topology to all directly connected network devices. Such flooding may be redundant, and, as such, may lead to reduced or sub-optimal performance of the network topology and/or one or more network devices within the network topology.

Li et al., "Dynamic Flooding on Dense Graphs; draft-ietf-lsr-dynamic-flooding-04", Internet Engineering Task Force, 26 November 2019, concerns solving the problem where routing with link state protocols in dense network topologies can result in sub-optimal convergence times due to the overhead associated with flooding. This can be addressed by decreasing the flooding topology so that it is less dense. This document discusses the problem in some depth and an architectural solution, and also describes specific protocol changes for IS-IS, OSPFv2, and OSPFv3.

H. Chen et al., "Flood Topology Computation Algorithm draft-cc-lsr-flooding-reduction-04", Internet Engineering Task Force, 8 July 2019, proposes an algorithm for a node to compute a flooding topology, which is a subgraph of the complete topology per underline physical network. When every node in an area automatically calculates a flooding topology by using a same algorithm and floods the link states using the flooding topology, the amount of flooding traffic in the network is greatly reduced. This would reduce convergence time with a more stable and optimized routing environment.

Frank et al., "EDFS a novel flooding protocol for multi-hop wireless networks" describes in Wireless On-demand Network Systems and Services (WONS), 2010 Seventh International Conference Kranjska Gora, Slovenia 2010-02-03, IEEE, an "Extended Depth First Search" (EDFS) protocol by combining a Depth First Search, DFS, and an Breadth First Search, BFS, algorithm to efficiently determine a relay for the flooding of broadcast messages in multi-hop wireless networks.

### SUMMARY

The present invention provides for a method for computing a flooding topology of a network as set out in claim 1.

The present invention further provides a non-transitory computer readable medium as set out in claim 9.

The present invention also provides a network device as set out in claim 10.

### BRIEF DESCRIPTION OF DRAWINGS

FIG. 1 shows a network topology in accordance with one or more embodiments described herein.
FIG. 2 shows a flooding topology in accordance with one or more embodiments described herein.
FIG. 3 shows a flowchart describing a method for network flooding topology computation in accordance with one or more embodiments described herein.
FIG. 4 shows a flowchart describing a method for identifying an initial graph cycle in accordance with one or more embodiments described herein.
FIG. 5 shows a flowchart describing a method for identifying a subsequent graph path in accordance with one or more embodiments described herein.
FIGS. 6A-6H show an exemplary derivation of a flooding topology from a network topology in accordance with one or more embodiments described herein.

### DETAILED DESCRIPTION

Specific embodiments will now be described in detail with reference to the accompanying figures.

In general, embodiments described herein relate to the computation of network flooding topologies. A flooding topology may refer to a subset of a network, which is derived or calculated by a network device, for example an area leader (i.e., a designated network device) of the network. Computation of the flooding topology may entail the iterative incorporation (or absorption) of nodes and edges of a first connected graph, representing network devices and interconnections of a network topology of the network, into a second connected graph representing the flooding topology.

In one or more embodiments, any computed flooding topology should exhibit at least the following properties: (a) the flooding topology must include all nodes of a network topology of the network, thereby facilitating the distribution of the link state updates throughout the entirety of the network; (b) the flooding topology must be bi-connected, thereby safeguarding the flooding topology from single-point failures; (c) the flooding topology should be bound by a given diameter (i.e., a longest of all the calculated shortest paths in the network) limitation in order to minimize link state update dissemination latency; and (d) the flooding topology should be bound by a given node degree (i.e., a
number of connections or edges any node has to other nodes) limitation in order to balance the link state update dissemination load evenly across the nodes (or network devices) of the network.

In one or more embodiments, the properties of node coverage, bi-connectivity, limited diameter, and bounded degree are all achieved simultaneously. Node coverage is a necessity for the correct operation of the link state protocol. Bi-connectivity is advantageous because it makes the flooding topology immune to single link or single node failures. In practice, almost all failures are of a single link or node. With a bi-connected flooding topology, the area leader can re-compute the flooding topology and distribute it on the existing flooding topology in a non-disruptive fashion, without resorting to partition repair. By limiting the diameter of the flooding topology, the algorithm helps to ensure that the convergence time of the link state protocol is preserved. If the diameter of the flooding topology is large, then the latency involved in flooding can become the dominating factor in the protocol convergence time and hinder the prompt rerouting of the network when there is a failure. Bounding the node degree of the flooding topology ensures that the work is as evenly distributed as possible within the flooding topology, avoiding giving an undue workload to any node and thereby maximizing the scalability of the network.

In one or more embodiments, the computation (or derivation) of the flooding topology may be performed in a constructive manner while creating and preserving the four essential properties described above. Further, the computation may be performed in an efficient fashion and can be derived from an arbitrary network topology.

In accordance with various embodiments, derivation of the flooding topology of a network may entail starting with a first connected graph representing the network topology of the network, which may be conveyed using a set of nodes (i.e., each representative of a network device on the network) interconnected by a set of edges (i.e., each representing a connection on the network between a pair of network devices). Next, a node of the set of nodes may be selected to serve as a root node, which may be employed to initialize a second connected graph representing the flooding topology. The root node may represent a node of the set of nodes having the highest node degree (also referred to as the largest node degree) across the first connected graph. Subsequently, expanding outwardly from the root node, the second connected graph (i.e., flooding topology) may be built-up iteratively through the traversal of the first connected graph to identify an initial graph cycle and a finite set of graph paths. The initial graph cycle may encompass a linked collection of nodes starting from and ending on the root node, and connected by a non-repetitive subset of the set of edges, where the linked collection of nodes include the root node and a non-repetitive subset of the set of nodes (excluding the root node and each excluded from the second connected graph). Meanwhile, each graph path may encompass a linked collection of nodes starting from a first node and ending on a second node (both excluded from the second connected graph), and connected by a non-repetitive subset of the set of edges, where the linked collection of nodes includes the first node, the second node, and a non-repetitive subset of the set of nodes (each not included in the second connected graph).

Further, the identification of the initial graph cycle and each graph path entails two traversing stages: (a) an outward traversal stage, which may encompass traversing the first connected graph outwardly from the starting node using a depth first search (DFS) algorithm; and (b) an inward traversal stage, which may alternatively encompass traversing the connected graph inwardly back to the ending node using a breadth first search (BFS) algorithm. The aforementioned starting node, pertinent to the initial graph cycle, may be represented by the root node; or, alternatively, may be represented by a first node of a first pair of adjacent nodes (also including a second node) on the first connected graph for a given graph path. The aforementioned ending node, pertinent to the initial graph cycle, may be represented by the root node; or, alternatively, may be represented by a third node of a second pair of adjacent nodes (also including a fourth node) on the first connected graph for a given graph path. Concerning the graph path cases, the first and third nodes of the first and second pairs of adjacent nodes should not be part of the second connected graph at the time of selection, while the second and fourth nodes of the first and second pairs of adjacent nodes should be part of the second connected graph at the time of selection. Moreover, following the identification of the initial graph cycle and each graph path, the second connected graph is updated using the initial graph cycle and each graph path, thereby adding a subset of nodes and a subset of edges to the second connected graph iteratively. Derivation of the flooding topology may end when the second connected graph has absorbed the initial graph cycle and as many graph paths (e.g., the set of graph paths) as it takes for the second connected graph to include the entirety of the set of nodes on the first connected graph. The final second connected graph subsequently includes all the nodes of the first connected graph, however, only exhibits a subset of the edges interconnecting the nodes of the first connected graph

In the following detailed description, numerous specific details are set forth in order to provide a more thorough understanding of the various embodiments. However, it will be apparent to one of ordinary skill in the art that the various embodiments may be practiced without these specific details. In other instances, well-known features have not been described in detail to avoid unnecessarily complicating the description.

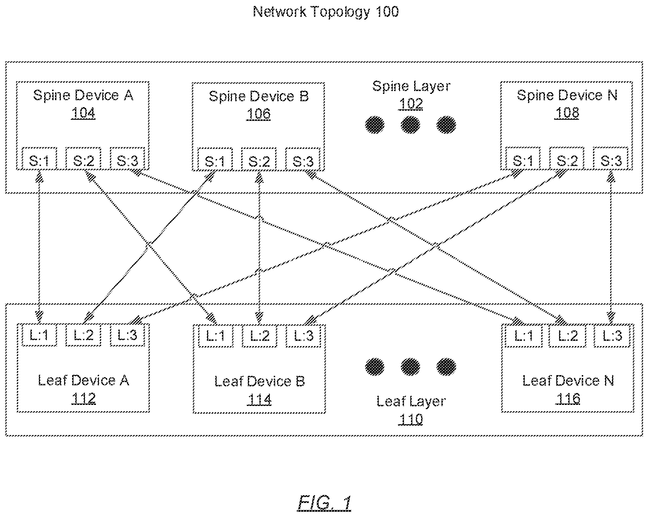

In the following description of FIGS. 1-6H, any component described with regard to a figure, in various embodiments, may be equivalent to one or more like-named components described with regard to any other figure. For brevity, descriptions of these components will not be repeated with regard to each figure. Thus, each and every embodiment of the components of each figure is incorporated by reference and assumed to be optionally present within every other figure having one or more like-named components. Additionally, in accordance with various embodiments, any description of the components of a figure is to be interpreted as an optional embodiment which may be implemented in addition to, in conjunction with, or in place of the embodiments described with regard to a corresponding like-named component in any other figure.

Throughout the application, ordinal numbers (e.g., first, second, third, etc.) may be used as an adjective for an element (i.e., any noun in the application). The use of ordinal numbers is not to necessarily imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

Throughout the application, the phrase 'operatively connected' may be used to describe a connection between components. As used hereinafter, the aforementioned phrase may refer to any direct (e.g., wired directly between two or more components) or indirect (e.g., wired and/or wireless connections between any number of components connecting the operatively connected components) connection.

FIG. 1 shows a network topology in accordance with one or more embodiments. As shown in FIG. 1, the network topology (100) includes a spine layer (102) and a leaf layer (110). The spine layer (102) may include any number of spine devices, such as spine device A (104), spine device B (106), and spine device N (108). The leaf layer (110) may include any number of leaf devices, such as leaf device A (112), leaf device B (114), and leaf device N (116). Each of these components is described below.

In one or more embodiments, a network topology (100) is an arrangement of various elements of a network. In one or more embodiments, a network includes a collection of one or more network devices (e.g., spine devices (104, 106, 108), leaf devices (112, 114, 116)) that facilitate network connectivity for one or more operatively connected devices (e.g., computing devices, data storage devices, etc.). As used herein, the term operatively connected, or operative connection, means that there exists between elements/components a direct or indirect connection that allows the elements to interact with one another in some way. For example, such elements may exchange information, send instructions to perform actions, cause changes in state and/or operating condition, etc. Additionally, as used herein, a network may be an entire network or any portion thereof (*e.g*., a logical area of network devices within the network topology). A network may include a datacenter network, a wide area network, a local area network, a wireless network, a cellular phone network, or any other suitable network that facilitates the exchange of information from one part of the network to another. In one embodiment, the network may be coupled with or overlap, at least in part, with the Internet.

In one embodiment, the network topology (100) is a bipartite network topology. In one or more embodiments, a bipartite network topology is a network topology in which there are at least two sets of network devices, with connections between devices of one set and devices of another set, but no connections between devices within a given set. Examples of such network topologies include, but are not limited to, a folded three-stage Clos network topology, a fat tree topology (*i.e.,* Leiserson topology), and a spine-leaf topology. In one or more embodiments, such network topologies may be referred to as dense network topologies. In one or more embodiments, a dense network topology is a network topology in which the network devices are highly interconnected, with, as an example, each device in a first set of network devices being connected to each device in a second set of network devices within the network topology. In the exemplary embodiment shown in FIG. 1, the network topology (100) is a spine-leaf topology. Although, FIG. 1 shows an example of a spine-leaf topology, in one or more embodiments, the network topology is not limited to being a spine-leaf topology (or the particular example shown), or any other example of a dense network topology set forth herein.

In one or more embodiments, when a network topology (100) is arranged as a spine-leaf topology, the network topology (100) includes a leaf layer (110) and a spine layer (102).

In one or more embodiments, a leaf layer (110) is a set of any number of network devices (e.g., leaf devices (112, 114, 116)) that provide network connectivity to any number of attached devices, such as computing devices (not shown). In one or more embodiments, a computing device is any device or any set of devices capable of electronically processing instructions and that includes, at least, one or more processors, memory, input and output device(s), and network connectivity via a leaf layer (110). Examples of computing devices include, but are not limited to, a server (*e.g*., a blade-server in a blade-server chassis, a rack server in a rack, etc.), a virtual machine (VM), a desktop computer, a mobile device (*e.g.,* laptop computer, smart phone, personal digital assistant, tablet computer, and/or any other mobile computing device), and/or any other type of computing device with the aforementioned requirements. Other examples of devices for which a leaf layer (110) may provide network connectivity include, but are not limited to, data storage devices (not shown), other network devices *(*e*.g.,* wireless routers) (not shown), media devices (*e.g*., televisions) (not shown), etc.

In one or more embodiments, a spine layer (102) is a set of any number of network devices (*e.g.,* spine devices (104, 106, 108)) that provide network connectivity between network devices of a leaf layer (110), and may also be operatively connected to other network devices, such as edge routers (not shown), gateway routers (not shown), network controllers (not shown), etc. In one or more embodiments, each leaf device (112, 114, 116) within a leaf layer (102) is operatively connected to each spine device (104, 106, 108) within a spine layer (102), and each spine device (104, 106, 108) within a spine layer is operatively connected to each leaf device (112, 114, 116) within a leaf layer (102). Such connections may be referred to as creating a dense mesh (*e.g.,* a full mesh) between the leaf layer (110) and the spine layer (102), thereby creating a dense network- topology (100).

In one or more embodiments, each leaf device (112, 114, 116) and each spine device (104, 106, 108) is a network device. In one or more embodiments, a network device may be a physical device that includes and/or may operatively connected to persistent storage (not shown), memory *(*e*.g.,* random access memory (RAM)) (not shown), one or more processor(s) (*e.g.,* integrated circuits) (not shown), and two or more physical network interfaces (which may also be referred to as ports).

As shown in FIG. 1, examples of such interfaces include ports S:1, S:2, and S:3 on each spine device (104, 106, 108) and ports L:1, L:2, and L:3 on each leaf device (112, 114, 116). Although not shown in FIG. 1, leaf devices (112, 114, 116) and/or spine devices (104, 106, 108) may have any number of additional ports. In one or more embodiments, the one or more processors of a network device (*e.g.,* a central processing unit) are separate components from a network chip, one or more of which may also be components of a network device.

In one or more embodiments, the network device also includes any number of network chips. In one or more embodiments, a network chip is any hardware (*e.g*., circuitry), software, firmware, and/or combination thereof that includes functionality to receive, process, and/or transmit network traffic data units in accordance with one embodiment. In order to perform such functionality, a network chip may include any number of components. Such components may include, but are not limited to, one or more processors, one or more buffers (*e.g.,* for implementing receive and/or transmit queues, such as virtual output queues (VOQs)), any type or amount of non-volatile storage, and/or any type or amount of volatile storage (*e.g*., RAM). A network chip may also include and/or be operatively connected to any number of physical network interfaces (*e.g.,* L:1, L:2, L:3, S:1, S:2, or S:3 as shown in FIG. 1) of a network device. Such interfaces may provide a path external to the network device (*e.g.,* to other devices), and/or may be operatively connected to other components internal to the network device (100), and each such interface may be an ingress and/or egress interface.

In one or more embodiments, a network device includes functionality to receive network traffic data units *(e.g.,* frames, packets, etc.) at any of the physical network interfaces (*i.e.,* ports) of the network device and to process the network traffic data units to determine whether to: (*i*) drop the network traffic data unit; (*i*i*)* process the network traffic data unit; and/or (*iii*) transmit the network traffic data unit, based on the processing, from a physical network interface or port on the network device in accordance with one embodiment.

As a non-limiting example, a network chip may be hardware that receives network traffic data units at an ingress port, and determines out of which egress port on the network device (100) to forward the network traffic data units such as, for example, media access control (MAC) frames that may include Internet Protocol (IP) packets.

In one or more embodiments, a network device (*e.g.,* leaf devices (112, 114, 116), spine devices (104, 106, 108)) may include functionality to store (*e.g.,* in persistent storage, in memory, etc.), any number of data structures for facilitating operation of at least some aspects of the network device. An example of such a data structure is a link state database (not shown)

In one or more embodiments, a link state database is a data structure for storing link state information received from neighboring network devices via the ports of a network device. In one or more embodiments, network devices within a network topology (100) (or a portion thereof (*e.g.,* a logical area within the topology)) share link state information using any of a variety of types data units (*e.g.,* packets, frames, messages, advertisements, etc.). Such data units may be sent from one network device to directly connected adjacent network devices, and may include information related to the state of links between the sending network device and other devices to which the sending network device is operatively connected.

When a data unit that includes link state information is received at a network device from an adjacent network device, the receiving network device may, in turn, propagate the data unit to its own adjacent network devices. Such sharing of link state information between network devices may occur within a network topology implementing an interior gateway protocol (IGP). Examples of an IGP include, but are not limited to, intermediate system to intermediate system (IS-IS) and open shortest path first (OSPF), each of which may be referred to as a type of IGP known as a link-state routing protocol.

In one or more embodiments, when a link-state routing protocol is implemented within a given network topology (or a portion therein), each device participating in the link-state routing topology receives, directly or indirectly, link state information from other devices in the network topology, or logical area within the network topology. In one or more embodiments, each network device uses the received information to build a mapping of the connectivity of network devices within the topology or logical area. Information relating to the mapping may be stored in the link state database.

A network device with a complete mapping of the connectivity of network devices within a topology or logical area may then use any scheme (*e.g.,* the Dijkstra algorithm) to determine a best path (*e.g.,* shortest path, path with the least cost, etc.) from itself to other network devices in the network topology or logical area, and such information may be stored in the link state database and/or used to program other portions of the network device (*e.g.,* a routing information base) with information to be used, for example, when processing a received network traffic data unit. The map of connectivity are generally the same on each network device in a topology or logical area, unless one or more network devices have a change in information related to the state of one or more links. Accordingly, once a mapping has been determined, link state information may be sent from a given network device when a change to link state information of any link of a network device occurs.

Link-state routing protocols often implement the sending of link state information to adjacent devices in a process often referred to as flooding, which is when the information is sent to each adjacent connected network device, all of which then send to each of their adjacent network devices, and so on, until all network devices have received the link state information. However, in a dense network topology (100), such flooding may lead to a large quantity of redundant data units being transmitted to network devices.

For example, in the spine-leaf network topology (100) shown in FIG. 1, if a link state change is detected on leaf device A (112), information related to the change may be flooded to each of the three spine devices (104, 106, 108). Each of the spine devices may then send the change to leaf device B (114) and leaf device N (116), each of which may send the change back to spine devices, etc. Such redundancy of receipt of link state information when changes occur within a dense network topology may lead to reduced performance of any given network device and/or the network topology as a whole, because each redundant data item must be processed in order to determine that it may ultimately be discarded. As an example, the packet queues (not shown) of a network device leading to a control plane (not shown) of the network device are necessarily of finite size. Therefore, if the flooding rate exceeds the update processing rate for enough time, the control plan may be obligated to drop incoming updates. If such lost updates are of significance, stabilization of the link state database and the convergence of the network may be delayed.

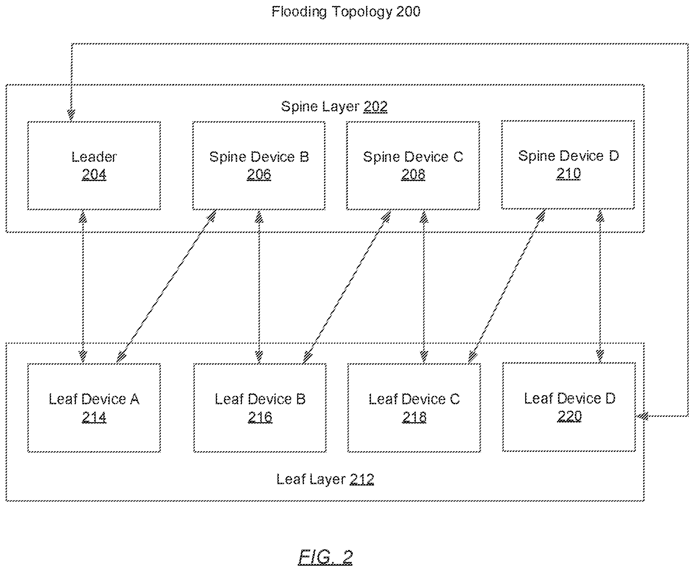

One embodiment may lessen the possibility of reduced performance by only flooding link state change information within a computed flooding topology, which uses only a subset of the links connecting network devices within a network topology (100). Flooding topologies are discussed further in the description of FIG. 2, below.

In one or more embodiments, the network device also includes software and/or firmware stored in any network device storage (not shown) and/or network device memory (not shown) (*i.e.,* non-transitory computer readable mediums). Such software may include instructions which, when executed by the one or more processors (not shown) of the network device, cause the one or more processors to perform operations to accordance with one embodiment. The software instructions may be in the form of computer readable program code to perform embodiments may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that when executed by a processor(s), is configured to perform functionality related to embodiments. The functionality of a network device is not limited to the aforementioned examples.

Examples of a network device include, but are not limited to, a network switch, a router, a multilayer switch, a fibre channel device, an InfiniBand^{®} device, etc. A network device is not limited to the aforementioned specific examples.

While FIG. 1 shows a configuration of components, other configurations may be used without departing from the scope. For example, the network topology may be any dense network topology other than the spine-leaf topology shown in FIG. 1. As another example, the quantity of network devices in the spine layer may be less (or more) than the quantity of network devices in the leaf layer. As another example, each leaf device and each spine device may have any number of additional ports for connecting to any number of other devices, or that may not be connected to any other device at a given time. Accordingly, embodiments disclosed herein should not be limited to the configuration of components shown in FIG. 1.

FIG. 2 shows a flooding topology in accordance with one or more embodiments. As shown in FIG. 2, the flooding topology (200) includes a leaf layer (212) and a spine layer (202). The spine layer (202) may include a leader (204), spine device B (206), spine device C (208), and spine device D (210). The leaf layer may include leaf device A (214), leaf device B (216), leaf device C (218), and leaf device D (220). Each of these components is described below.

In one or more embodiments, the leaf layer (212) is substantially similar to the leaf layer (110) shown in FIG. 1 and discussed above. Additionally, in one or more embodiments, the spine layer (202) is substantially similar to the spine layer (102) shown in FIG. 1 and discussed above.

In one or more embodiments, each of the leaf devices (214, 216, 218, 220) and each of the spine devices (204, 206, 208, 210) are network devices and, as such, are substantially similar, respectively, to the leaf devices (112, 114, 116) and the spine devices (104, 106, 108) shown in FIG. 1 and discussed above. However, for the sake of clarity, all of the connections between each leaf device (214, 216, 218, 220) and each spine device (204, 206, 208, 210) are not shown in FIG. 2. Instead, only a subset of the connections is shown. The subset may be referred to as a flooding topology (200).

In one or more embodiments, a flooding topology (200) is a subset of links within a dense network topology that includes enough links such that there is at least one path between each network device in the topology to each other network device in the topology. In one or more embodiments, link state updates are only flooded on links included in the flooding topology (200), rather than to all links connected to adjacent network devices, which may reduce the redundancy of flooding within a network topology implementing a link-state routing protocol. In one or more embodiments, a flooding topology (200) may include more than one path between each device and every other device. For example, as shown in FIG. 2, there are two paths between each network device and every other network device, which may be referred to as a bi-connected flooding topology.

However, while the simple bi-connected cycle shown in FIG. 2 may be adequate as a flooding topology (200) for correctness and resiliency, such a flooding topology may not be optimal for convergence of link state databases on each of the network devices within the topology, because the diameter *(i.e.,* the longest path between any two network devices in a topology) of the flooding topology may be half the number of network devices in the topology, which may cause an undesired delay in link state update propagation. Therefore, in one or more embodiments, the actual flooding topology may have a bound on the diameter, which may be referred to as a diameter threshold.

Additionally, although FIG. 2 shows a flooding topology (200) where each network device has two links used as part of the flooding topology, as more redundant paths between nodes are added to a flooding topology (200), and when attempting to keep the diameter of the flooding topology below a diameter threshold, specific network devices may end up with more links as part of the flooding topology than other devices. Having a high number of links as part of the flooding topology may cause reduced performance for the network devices with a high number of links. Accordingly, when computing a flooding topology, in one or more embodiments, the number of links within the flooding topology (*i.e.,* the degree) of any given network device may be bounded, which may be referred to as a threshold node degree.

In one or more embodiments, at least one network device in the flooding topology is elected as a leader (204). In one or more embodiments, a leader (204) is a network device elected using any scheme for electing a leader within a network topology of logical area of a network topology. In one or more embodiments, the leader includes functionality to compute a flooding topology, encode the computed flooding topology, and distribute the encoded flooding topology within a network topology or logical area therein.

While FIG. 2 shows a configuration of components, other configurations may be used without departing from the scope. For example, as discussed above, there may be more links in the subset of links that are the flooding topology, leading to more paths between network devices (*i.e.,* greater path redundancy). As another example, the leader may be any device in the topology, rather than a spine device as shown in FIG. 2. As another example, there may be differing numbers of devices in the spine layer and the leaf layer. As another example, there may be differing numbers of links on the various network devices that are part of the flooding topology. Accordingly, embodiments disclosed herein should not be limited to the configuration of components shown in FIG. 2.

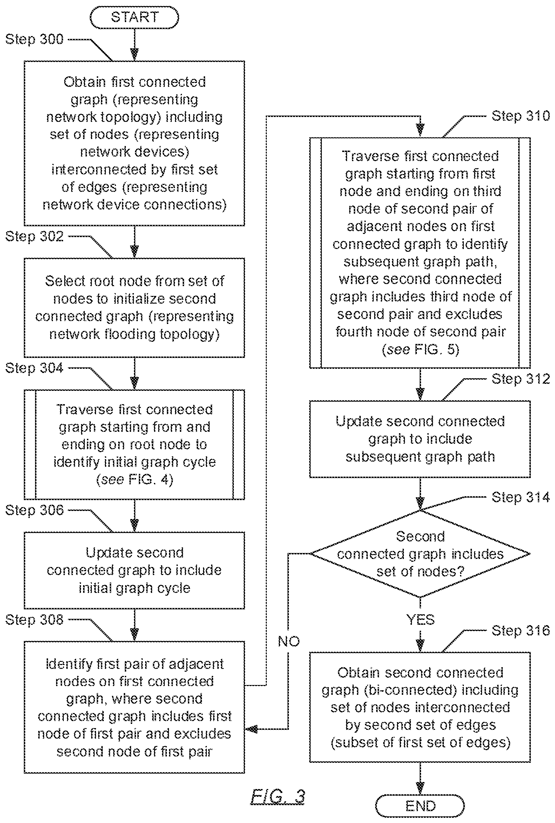

FIG. 3 shows a flowchart describing a method for network flooding topology computation in accordance with one or more embodiments. The various steps outlined below may be performed by the leader of a network topology (see e.g., FIG. 2). Further, while the various steps in the flowchart are presented and described sequentially, one of ordinary skill will appreciate that some or all steps may be executed in different orders, may be combined or omitted, and some or all steps may be executed in parallel.

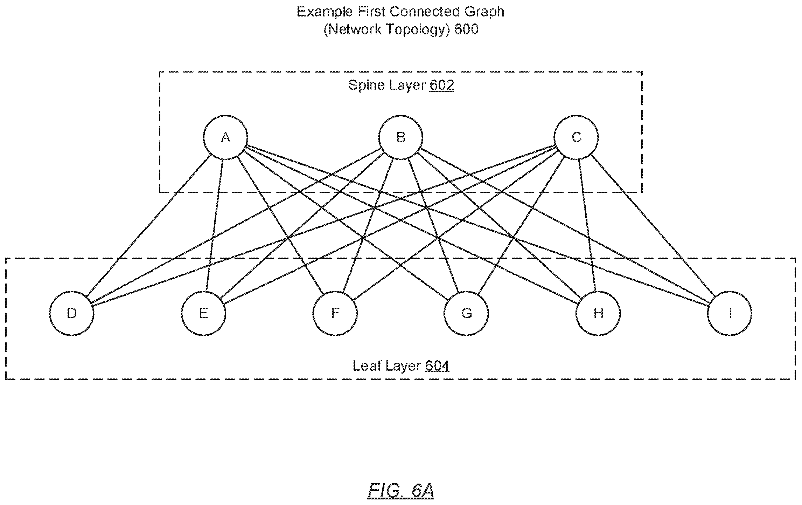

Turning to FIG. 3, in Step 300, a first connected graph is obtained. In one or more embodiments, the first connected graph may represent a network topology (see e.g., FIG. 1) of a network. Further, the first connected graph may include a set of nodes, representing the set of network devices in the network, interconnected by a first set of edges representing the interconnections between the set of network devices. An example of the first connected graph is illustrated in FIG. 6A, where the set of nodes may be shown as the labeled circles and the first set of edges may be shown as the solid lines connecting the various labeled circles.

In Step 302, a root node is selected from the above-mentioned set of nodes of the first connected graph (obtained in Step 300). In one or more embodiments, the root node may be used to initialize a second connected graph representing a flooding topology (see e.g., FIG. 2) of the network. Further, selection of the root node may entail identifying a node of the set of nodes that reflects a highest node degree. The degree (or node degree) of any given node of a connected graph may refer to the number of links or edges which touch the given node. For example, referring to the exemplary first connected graph shown in FIG. 6A, the node degree for node A is six (i.e., six edges touch node A), whereas the node degree for node D is three (i.e., three edges touch node D). Accordingly, based on this logic, the root node may refer to a node of the first connected graph that touches the highest number of edges. Should two or more nodes of the first connected graph reflect equal highest node degrees, then the root node may be selected from these two or more nodes based on additional factors - e.g., a central processing unit (CPU) capacity of the node, a memory capacity of the node, a number of unused network interfaces (or ports) on the node, and/or a centrality of the node in the network topology.

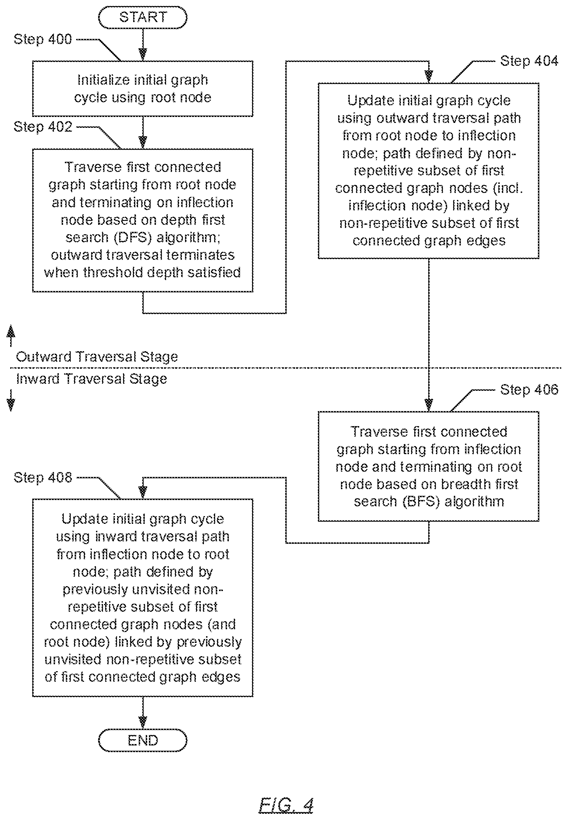

In Step 304, the first connected graph (obtained in Step 300) is traversed to identify an initial graph cycle. The initial graph cycle represents a path formed from a subset of the set of nodes connected through a subset of the first set of edges. The subset of the set of nodes may encompass the root node from and to which the initial graph cycle originates and terminates, and one or more other nodes of the first connected graph. Further, the aforementioned other node(s) may be non-repetitive, or may only be visited once each. Similarly, the subset of the first set of edges may also be non-repetitive. Traversal of the first connected graph to identify the initial graph cycle is described in further detail below with respect to FIG. 4.

In Step 306, the second connected graph (initialized in Step 302) is updated to include (or absorb) the initial graph cycle (identified in Step 304). Hereafter, in Step 308, a first pair of adjacent nodes, of the set of nodes forming the first connected graph, is identified. Specifically, in one or more embodiments, the first pair of adjacent nodes may refer to two nodes connected to one another through an edge of the first set of edges. Further, the first pair of adjacent nodes may include a first node that has previously been absorbed and, hence, may form the second connected graph at least in part; and a second node that has yet to be incorporated into the second connected graph. Identification of the first pair of adjacent nodes may be constrained or bound by a user-configurable maximum or threshold node degree. In general, a degree of a given node in a connected graph may reflect the number of edges touching the given node (or links connecting the given node to another node). Accordingly, the threshold node degree may refer to a maximum number of edges that may touch any node of the connected graph.

In Step 310, the first connected graph (obtained in Step 300) is traversed to identify a subsequent graph path. The subsequent graph path represents another path formed from a subset of the set of nodes connected through a subset of the first set of edges. More specifically, the subsequent graph path may represent a path that originates at/from the above-mentioned first node (i.e., previously absorbed by the second connected graph) of the first pair of adjacent nodes (identified in Step 308) and terminates at/to one of the nodes (i.e., a third node) of a second pair of adjacent nodes. Like the first pair of adjacent nodes, the second pair of adjacent nodes may refer to two nodes connected to one another through an edge of the first set of edges. The second pair of adjacent nodes may include the (path-terminating) third node that has previously been absorbed to form part of the second connected graph; and a fourth node that has yet to be incorporated into the second connected graph. Identification of the second pair of adjacent nodes may be constrained or bound by a user-configurable maximum or threshold node degree. In general, a degree of a given node in a connected graph may reflect the number of edges touching the given node (or links connecting the given node to another node). Accordingly, the threshold node degree may refer to a maximum number of edges that may touch any node of the connected graph. In one or more embodiments, the aforementioned second and fourth nodes may be the same node.

Subsequently, in one or more embodiments (i.e., when the second and fourth nodes are not the same node), the subset of the set of nodes, forming the subsequent graph path, may encompass the first and second nodes of the first pair of adjacent nodes, the third and fourth nodes of the second pair of adjacent
nodes, and zero or more other nodes of the first connected graph, where the other nodes (if any) may be visited non-repetitively between the aforementioned second and fourth nodes. In another embodiment (i.e., when the second and fourth nodes are the same node), the subset of the set of nodes, forming the subsequent graph path, may encompass the first and second nodes of the first pair of adjacent nodes, and the third node of the second pair of adjacent nodes. In yet another embodiment (i.e., in degenerate cases), the subset of the set of nodes, forming the subsequent graph path, may encompass the first node of the first pair of adjacent nodes and the third node of the second pair of adjacent nodes. Further, in any of the aforementioned embodiments, any node of the first and second pairs of adjacent nodes may also be non-repetitive and, thus, may only be visited once in the formation of the subsequent graph path.

Moreover, in one or more embodiments (i.e., when the second and fourth nodes are not the same node), the subset of the first set of edges, forming the subsequent graph path, may include a first edge connecting the first pair of adjacent nodes, a second edge connecting the second pair of adjacent nodes, and at least one other edge of the first set of edges connecting the zero or more other nodes visited between the second node and the fourth node of the first and second pairs of adjacent nodes, respectively. In another embodiment (i.e., when the second and fourth nodes are the same node), the subset of the first set of edges, forming the subsequent graph path, may include a first edge connecting the first pair of adjacent nodes and a second edge connecting the second node and the third node of the first and second pairs of adjacent nodes, respectively. In yet another embodiment (i .e., in degenerate cases), the subset of the first set of edges, forming the subsequent graph path, may include a single edge connecting the first node and the third node of the first and second pairs of adjacent nodes, respectively.

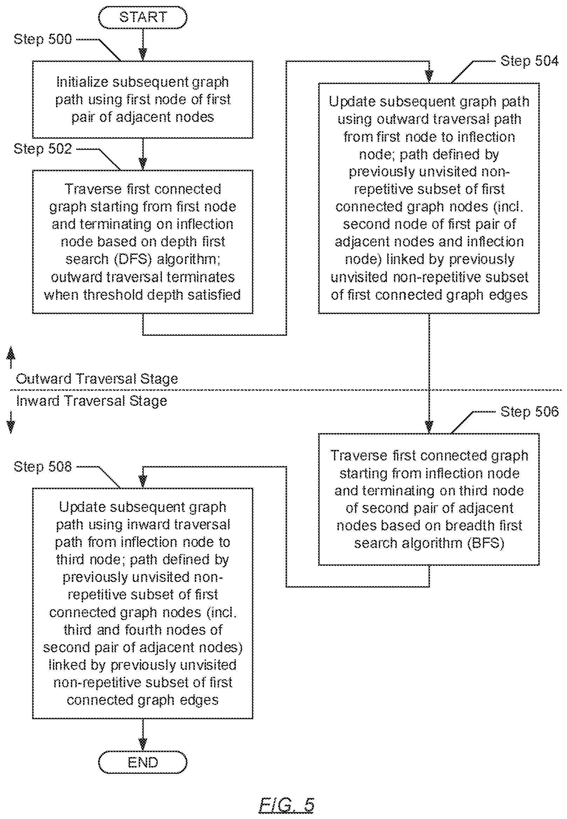

Traversal of the first connected graph to identify the subsequent graph path is described in further detail below with respect to FIG. 5.

In Step 312, the second connected graph (updated in Step 306) is further updated to include (or absorb) the subsequent graph cycle (identified in Step 310). Hereafter, in Step 314, a determination is made as to whether the second connected graph (updated in Step 312) includes (or has absorbed) each node of the set of nodes representing the first connected graph. In one or more embodiments, if it is determined that the aforementioned set of nodes, in entirety, has been incorporated into the second connected graph, then the process proceeds to Step 316. On the other hand, in another embodiment, if it is alternatively determined that at least one node of the set of nodes remains to be absorbed by the second connected graph, then the process alternatively proceeds to Step 308 (where another first pair of adjacent nodes may be identified to form and identify another subsequent graph path thereafter).

In Step 316, upon determining (in Step 312) that the second connected graph (updated in Step 312) includes (or has absorbed) each node of the set of nodes representing the first connected graph, computation of the network flooding topology terminates. Upon termination, in one or more embodiments, the second connected graph may reflect a bi-connected graph, or a graph where each node of the graph touches at least two edges. In another embodiment (i.e., in degenerate cases), the second connected graph may not reflect a bi-connected graph. Further, upon termination, the second connected graph may include a second set of edges interconnecting the set of nodes, where the second set of edges includes a subset of the first set of edges interconnecting the set of nodes in the first connected graph.

FIG. 4 shows a flowchart describing a method for identifying an initial graph cycle in accordance with one or more embodiments. The various steps outlined below may be performed by the leader of a network topology (see e.g., FIG. 2). Further, while the various steps in the flowchart are presented and described sequentially, one of ordinary skill will appreciate that some or all steps may be executed in different orders, may be combined or omitted, and some or all steps may be executed in parallel.

Turning to FIG. 4, in Step 400, the initial graph cycle (described above) (see e.g., FIG. 3) is initialized using a root node. The root node is selected from a set of nodes included in a first connected graph. The first connected graph represents a network topology (see e.g., FIG. 1) of a network, whereas the set of nodes represents a set of network devices in the network. Selection of the root node is detailed above (see e.g., Step 302 of FIG. 3).

In Step 402, the first connected graph is subsequently traversed to identify an outward traversal path. The outward traversal path represents a path that originates at the root node (used to initialize the initial graph cycle in Step 400), terminates at an inflection node (described below), and may visit zero or more intermediate nodes in between the root and inflection nodes. Further, the traversal process follows any existing depth first search (DFS) algorithm until a threshold depth is met. In general, a depth of a given node in a connected graph may reflect the number of edges forming a path from the root (i.e., the root node) to the given node. Accordingly, the threshold depth may refer to a maximum number of edges forming a path from the root node to another node (of the set of nodes), where the aforementioned inflection node represents that other node. By way of an example, the threshold depth may be set to the computed network diameter of the first connected graph.

Furthermore, in one or more embodiments, the above-mentioned inflection node and intermediate node(s) (if any), of the outward traversal path, may encompass a previously unvisited and/or non-repetitive subset of the set of nodes included in the first connected graph. Similarly, the one or more edges connecting the nodes, forming the outward traversal path, may include a previously unvisited and/or non-repetitive subset of a set of edges (i.e., the first set of edges mentioned in the description of FIG. 3) interconnecting the set of nodes of the first connected graph.

In Step 404, the initial graph cycle (initialized in Step 400) is updated to include (or absorb) the outward traversal path (identified in Step 402). Collectively, the steps (i.e., Steps 400 through 404) thus far described may outline an outward traversal stage (defined by the outward traversal of the first connected graph away from the root node) for identifying the initial graph cycle. In contrast, the remaining steps (i.e., Steps 406 and 408) yet to be described may alternatively outline an inward traversal stage (defined by the inward traversal of the first connected graph returning to the root node) for identifying the initial graph cycle.

In Step 406, the first connected graph is traversed to identify an inward traversal path. The inward traversal path represents a path that originates at the inflection node (at which the outward traversal path had terminated), terminates at the root node (from which the outward traversal path had originated), and may visit zero or more other intermediate nodes (i.e., different from the intermediate nodes which may have been visited along the outward traversal path) in between the inflection and root nodes. Further, the traversal process follows any existing breadth first search (BFS) algorithm. By traversing outwardly using a DFS algorithm (constrained with a depth threshold) and inwardly using a BFS algorithm, a diameter of the second connected graph may be limited.

Moreover, in one or more embodiments, the above-mentioned other intermediate node(s) (if any), of the inward traversal path, may encompass a previously unvisited and/or non-repetitive subset of the set of nodes included in the first connected graph. Similarly, the one or more edges connecting the nodes, forming the inward traversal path, may include a previously unvisited and/or non-repetitive subset of the set of edges (i.e., the first set of edges mentioned in the description of FIG. 3) interconnecting the set of nodes of the first connected graph. Thereafter, in Step 408, the initial graph cycle (updated in Step 404) is further updated to include (or absorb) the inward traversal path (identified in Step 406).

FIG. 5 shows a flowchart describing a method for identifying a subsequent graph path in accordance with one or more embodiments. The various steps outlined below may be performed by the leader of a network topology (see e.g., FIG. 2). Further, while the various steps in the flowchart are presented and described sequentially, one of ordinary skill will appreciate that some or all steps may be executed in different orders, may be combined or omitted, and some or all steps may be executed in parallel.

Turning to FIG. 5, in Step 500, the subsequent graph path (described above) (see e.g., FIG. 3) is initialized using a first node of a first pair of adjacent nodes. In one or more embodiments, the first pair of adjacent nodes may refer to two nodes connected to one another through an edge of a set of edges (i.e., the first set of edges mentioned in the description of FIG. 3) interconnecting a set of nodes of a first connected graph. The first connected graph may represent a network topology (see e.g., FIG. 1) of a network, whereas the set of nodes may represent a set of network devices in the network. Further, the first pair of adjacent nodes may include the first node, which may refer to a node (of the set of nodes) that has previously been absorbed and, hence, may at least in part form a second connected graph representing a flooding topology (see e.g., FIG. 2) of the network; and a second node that has yet to be incorporated into the second connected graph.

In Step 502, the first connected graph is subsequently traversed to identify an outward traversal path. In one or more embodiments, the outward traversal path may represent a path that originates at the first node of the first pair of adjacent nodes (used to initialize the subsequent graph path in Step 500), terminates at an inflection node (described below), and may visit zero or more intermediate nodes in between the first and inflection nodes. Further, the traversal process may follow any existing depth first search (DFS) algorithm until a user-configurable maximum or threshold depth is met. In general, a depth of a given node in a connected graph may reflect the number of edges forming a path from the root (i.e., the first node of the first pair of adjacent nodes) to the given node. Accordingly, the threshold depth may refer to a maximum number of edges forming a path from the first node to another node (of the set of nodes), where the aforementioned inflection node represents that other node.

Furthermore, in one or more embodiments, the above-mentioned inflection node and intermediate node(s) (if any), of the outward traversal path, may encompass a previously unvisited and/or non-repetitive subset of the set of nodes included in the first connected graph. Similarly, the one or more edges connecting the nodes, forming the outward traversal path, may include a previously unvisited and/or non-repetitive subset of the set of edges (i.e., the first set of edges mentioned in the description of FIG. 3) interconnecting the set of nodes of the first connected graph.

In Step 504, the subsequent graph path (initialized in Step 500) is updated to include (or absorb) the outward traversal path (identified in Step 502). Collectively, the steps (i.e., Steps 500 through 504) thus far described may outline an outward traversal stage (defined by the outward traversal of the first connected graph away from the first node of the first pair of adjacent nodes) for identifying the subsequent graph path. In contrast, the remaining steps (i.e., Steps 506 and 508) yet to be described may alternatively outline an inward traversal stage (defined by the inward traversal of the first connected graph towards a third node of a second pair of adjacent nodes) for identifying the subsequent graph path.

In one or more embodiments, the second pair of adjacent nodes may refer to two other nodes connected to one another through another edge of the set of edges (i.e., the first set of edges mentioned in the description of FIG. 3) interconnecting a set of nodes of a first connected graph. Further, the second pair of adjacent nodes may include the third node, which may refer to another node (i.e., aside from the first node of the first pair of adjacent nodes) (of the set of nodes) that has previously been absorbed and, hence, may also at least in part form the second connected graph; and a fourth node that has yet to be incorporated into the second connected graph. In one or more embodiments, the aforementioned second and fourth nodes may be the same node.

In Step 506, the first connected graph is traversed to identify an inward traversal path. In one or more embodiments, the inward traversal path may represent a path that originates at the inflection node (at which the outward traversal path had terminated), terminates at the third node of the second pair of adjacent nodes, and may visit zero or more other intermediate nodes (i.e., different from the intermediate nodes which may have been visited along the outward traversal path) in between the inflection and third nodes. Further, the traversal process may follow any existing breadth first search (BFS) algorithm. By traversing outwardly using a DFS algorithm (constrained with a depth threshold) and inwardly using a BFS algorithm, a diameter of the second connected graph may be limited.

Moreover, in one or more embodiments, the above-mentioned other intermediate node(s) (if any), of the inward traversal path, may encompass a previously unvisited and/or non-repetitive subset of the set of nodes included in the first connected graph. Similarly, the one or more edges connecting the nodes, forming the inward traversal path, may include a previously unvisited and/or non-repetitive subset of the set of edges (i.e., the first set of edges mentioned in the description of FIG. 3) interconnecting the set of nodes of the first connected graph. Thereafter, in Step 508, the subsequent graph path (updated in Step 504) is further updated to include (or absorb) the inward traversal path (identified in Step 506).

FIGS. 6A-6H show an exemplary derivation of a flooding topology from a network topology in accordance with one or more embodiments. The following exemplary flooding topology derivation, presented in conjunction with components shown in FIGS. 6A-6H, is for explanatory purposes only and not intended to limit the scope.

Turning to FIG. 6A, a first connected graph (600), representing a network topology of an exemplary network, is illustrated. The first connected graph (600) includes a set of nodes (i.e., nine nodes), representing the set of network devices in the exemplary network, which are interconnected by a first set of edges representing the interconnections between the set of network devices. As portrayed in FIG. 6A, the set of nodes is shown as labeled (i.e., A-1) circles and the first set of edges is shown as the solid lines interconnecting the labeled circles. Further, the top three nodes (i.e., nodes A-C) of the first connected graph (600) may correspond to a spine layer (602) of the network topology, whereas the bottom six nodes (i.e., nodes D-I) of the first connected graph (600) may correspond to a leaf layer (604) of the network topology.

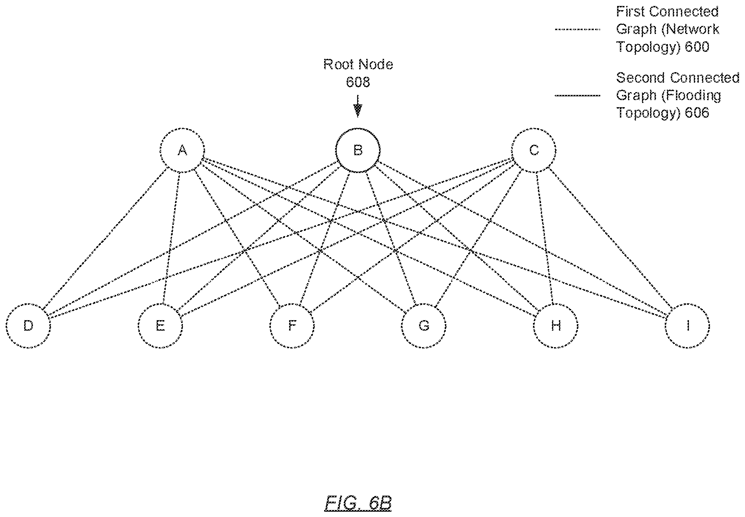

Turning to FIG. 6B, in order to initialize a second connected graph (606), representing a flooding topology corresponding to the network topology (600) of the exemplary network, a root node (608) is selected. Details concerning the selection of root nodes are described above with respect to FIG. 3. In this example, assume node B is selected to represent the root node (608). Further, hereinafter, nodes and edges belonging to the first connected graph (600) may be portrayed using dotted lines, whereas nodes and edges, of the first connected graph (600), that have been incorporated (or absorbed) into the second connected graph (606) may be alternatively portrayed using solid lines. Looking at FIG. 6B, for example, node B (i.e., the root node) is the only solid-line object shown therein, thereby disclosing that, at this initialization stage of the second connected graph (606), the root node (608) represents the sole object (i.e., node or edge) of the first connected graph (600) which has been absorbed into the second connected graph (606).

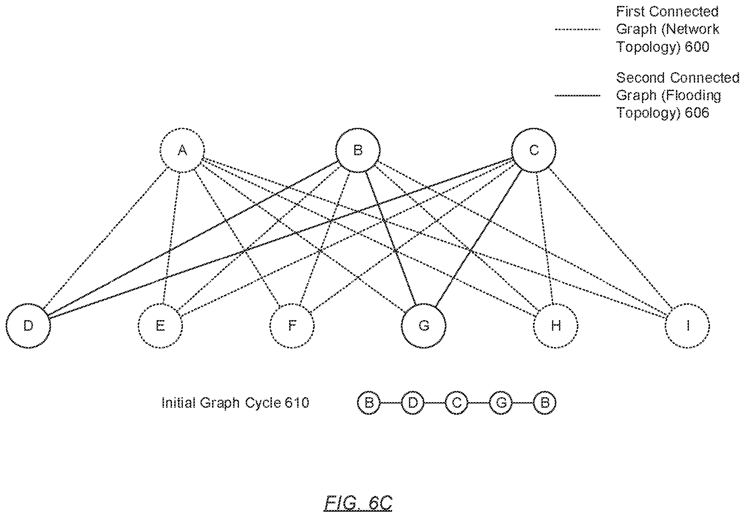

Turning to FIG. 6C, an initial graph cycle (610), from an unvisited subset of the nodes and edges (i.e., excluding the root node (608)) of the first connected graph (600), is identified. Details concerning the identification of initial graph cycles are described above with respect to FIG. 4. In this example, assume the nodal path B-D-C-G-B is identified to represent the initial graph cycle (610), where: node C represents the inflection node pertinent to the outward and inward traversal paths of the initial graph cycle (610). Following its identification, the initial graph cycle (610) is subsequently incorporated into the second connected graph (606).

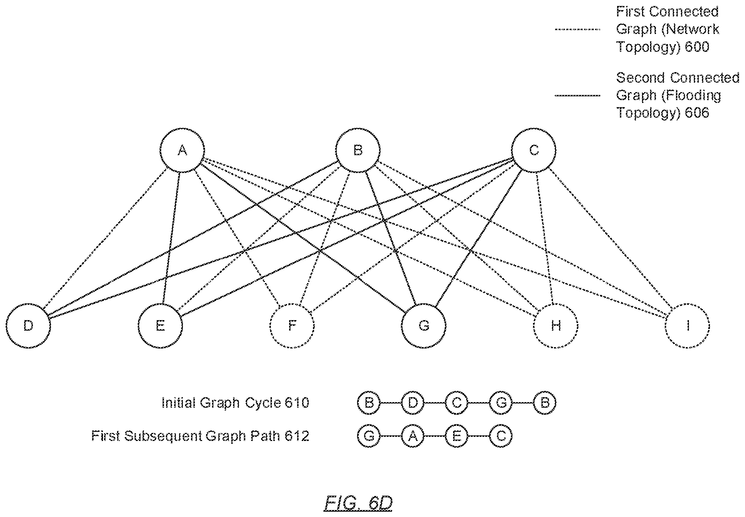

Turning to FIG. 6D, a first subsequent graph path (612), from an unvisited subset of nodes and edges (i.e., excluding the initial graph cycle (610)) of the first connected graph (600), is identified. Details concerning the identification of subsequent graph paths are described above with respect to FIG. 5. In this example, assume the nodal path G-A-E-C is identified to represent the first subsequent graph path (612), where: node G represents the first node (i.e., a node already incorporated into the second connected graph (606)) of the first pair of adjacent nodes; node A represents the second node (i.e., a node not yet incorporated into the second connected graph (606)) of the first pair of adjacent nodes; node C represents the third node (i.e., another node already incorporated into the second connected graph (606)) of the second pair of adjacent nodes; node E represents the fourth node (i.e., another node not yet incorporated into the second connected graph (606)) of the second pair of adjacent nodes; and node A or E may represent the inflection node pertinent to the outward and inward traversal paths of the first subsequent graph path (612). At least nodes G and C may be identified based on their respective node degrees, which may be bound by a threshold node degree set for the flooding topology. Following its identification, the first subsequent graph path (612) is subsequently incorporated into the second connected graph (606).

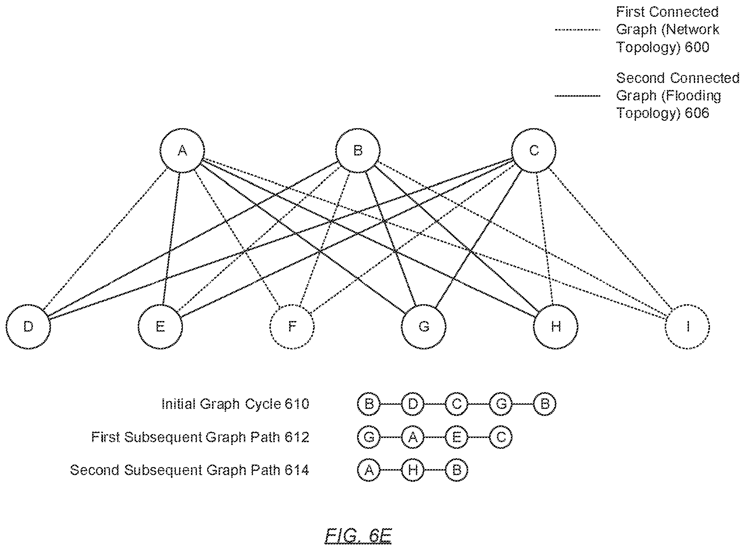

Turning to FIG. 6E, because the second connected graph (606) has yet to absorb all the nodes of the first connected graph (600), a second subsequent graph path (614), from an unvisited subset of nodes and edges (i.e., excluding the initial graph cycle (610) and the first subsequent graph path (612)) of the first connected graph (600), is identified. Details concerning the identification of subsequent graph paths are described above with respect to FIG. 5. In this example, assume the nodal path A-H-B is identified to represent the second subsequent graph path (614), where: node A represents the first node (i.e., a node already incorporated into the second connected graph (606)) of the first pair of adjacent nodes; node H represents the second node (i.e., a node not yet incorporated into the second connected graph (606)) of the first pair of adjacent nodes; node B represents the third node (i.e., another node already incorporated into the second connected graph (606)) of the second pair of adjacent nodes; node H also represents the fourth node (i.e., another node not yet incorporated into the second connected graph (606)) of the second pair of adjacent nodes; and node H further represents the inflection node pertinent to the outward and inward traversal paths of the second subsequent graph path (614). At least nodes A and B may be identified based on their respective node degrees, which may be bound by a threshold node degree set for the flooding topology. Following its identification, the second subsequent graph path (614) is subsequently incorporated into the second connected graph (606).

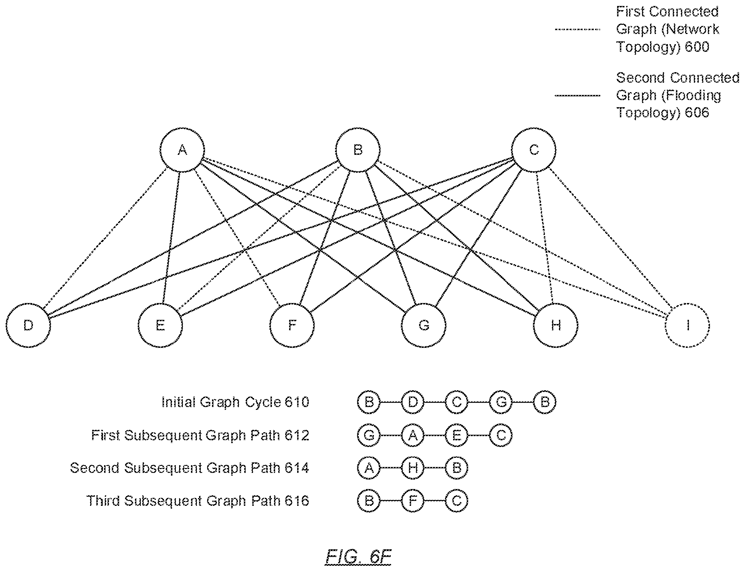

Turning to FIG. 6F, because the second connected graph (606) has yet to absorb all the nodes of the first connected graph (600), a third subsequent graph path (616), from an unvisited subset of nodes and edges (i.e., excluding the initial graph cycle (610), the first subsequent graph path (612), and the second subsequent graph path (614)) of the first connected graph (600), is identified. Details concerning the identification of subsequent graph paths are described above with respect to FIG. 5. In this example, assume the nodal path B-F-C is identified to represent the third subsequent graph path (616), where: node B represents the first node (i.e., a node already incorporated into the second connected graph (606)) of the first pair of adjacent nodes; node F represents the second node (i.e., a node not yet incorporated into the second connected graph (606)) of the first pair of adjacent nodes; node C represents the third node (i.e., another node already incorporated into the second connected graph (606)) of the second pair of adjacent nodes; node F also represents the fourth node (i.e., another node not yet incorporated into the second connected graph (606)) of the second pair of adjacent nodes; and node F further represents the inflection node pertinent to the outward and inward traversal paths of the third subsequent graph path (616). At least nodes B and C may be identified based on their respective node degrees, which may be bound by a threshold node degree set for the flooding topology. Following its identification, the third subsequent graph path (616) is subsequently incorporated into the second connected graph (606).

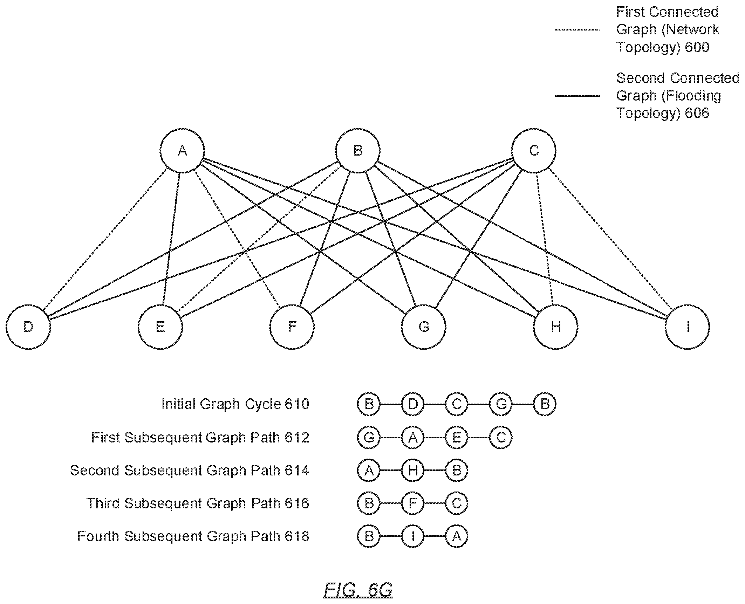

Turning to FIG. 6G, because the second connected graph (606) has yet to absorb all the nodes of the first connected graph (600), a fourth subsequent graph path (618), from an unvisited subset of nodes and edges (i.e., excluding the initial graph cycle (610), the first subsequent graph path (612), the second subsequent graph path (614), and the third subsequent graph path (616)) of the first connected graph (600), is identified. Details concerning the identification of subsequent graph paths are described above with respect to FIG. 5. In this example, assume the nodal path B-I-A is identified to represent the fourth subsequent graph path (618), where: node B represents the first node (i.e., a node already incorporated into the second connected graph (606)) of the first pair of adjacent nodes; node I represents the second node (i.e., a node not yet incorporated into the second connected graph (606)) of the first pair of adjacent nodes; node A represents the third node (i.e., another node already incorporated into the second connected graph (606)) of the second pair of adjacent nodes; node I also represents the fourth node (i.e., another node not yet incorporated into the second connected graph (606)) of the second pair of adjacent nodes; and node I further represents the inflection node pertinent to the outward and inward traversal paths of the fourth subsequent graph path (618). At least nodes B and A may be identified based on their respective node degrees, which may be bound by a threshold node degree set for the flooding topology. Following its identification, the fourth subsequent graph path (618) is subsequently incorporated into the second connected graph (606).

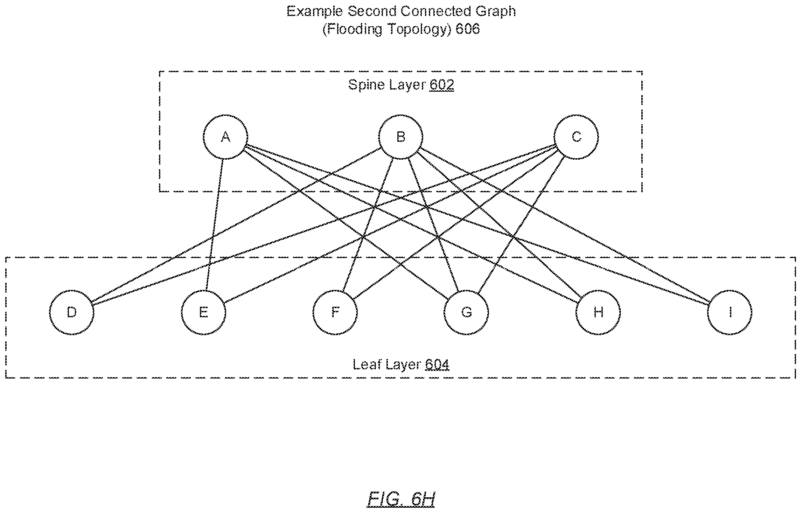

Turning to FIG. 6H, because the second connected graph (606) incorporates all the nodes of the first connected graph (600), computation of the flooding topology (i.e., the second connected graph (606)) terminates. The resulting flooding topology reflects a connected graph that is bi-connected, and includes a second set of edges interconnecting the set of nodes, where the second set of edges includes a subset of the first set of edges interconnecting the set of nodes in the first connected graph (600) (see e.g., FIG. 6A).

While the technology has been described with respect to a limited number of embodiments, those skilled in the art, having benefit of this disclosure, will appreciate that other embodiments can be devised which do not depart from the scope as disclosed herein. Accordingly, the scope should be limited only by the attached claims.

## Claims

1. A method for computing a flooding topology (200) of a network, comprising:
obtaining (step 300), by a network device (104) of the network, a first connected graph representing a topology of the network, the first connected graph comprising a set of nodes interconnected by a first set of edges;
selecting (step 302), by a network device (104) of the network, from the set of nodes, a root node to initialize a second connected graph representing the flooding topology; and
expanding, by a network device (104) of the network, by iteratively traversing the first connected graph, the second connected graph using an initial graph cycle (610) and a set of subsequent graph paths (612), the expanding the second connected graph continuing until the second connected graph comprises the set of nodes, wherein the initial graph cycle represents a path formed from a subset of the set of nodes interconnected through a subset of the first set of edges, and each subsequent graph path represents another path formed from a subset of the set of nodes interconnected through a subset of the first set of edges,
wherein expanding the second connected graph comprises:
traversing the first connected graph to identify the initial graph cycle (610), the traversing the first connected graph starting from the root node and ending at the root node, wherein identification of the initial graph cycle (610) comprises an outward traversal stage to identify an outward traversal path, followed by an inward traversal stage to identify an inward traversal path, wherein the outward traversal stage comprises traversing the first connected graph, originating at the root node and terminating at an inflection node, using a depth first search, DFS, algorithm until a threshold depth is met, and wherein the inward traversal stage comprises traversing the first connected graph, originating at the inflection node and terminating at the root node, using a breadth first search, BFS, algorithm, and wherein the initial graph cycle is defined by the outward traversal path and the inward traversal path;
identifying each subsequent graph paths (612); and
updating the second connected graph using the initial graph cycle (610) and each subsequent graph path (612) to add a subset of nodes and a subset of edges to the second connected graph iteratively.

2. The method of claim 1, wherein the selection of the root node from the set of nodes is based on a node degree of a given node, wherein a node degree of the root node is the largest across the set of nodes of the first connected graph.

3. The method of claim 1, wherein the initial graph cycle comprises the root node and a non-repetitive subset of the set of nodes linked by a non-repetitive subset of the first set of edges, wherein the second connected graph excludes the non-repetitive subset of the set of nodes prior to being updated using the initial graph cycle.

4. The method of claim 1, wherein expanding the second connected graph, further comprises:
identifying a first pair of nodes adjacent to one another on the first connected graph, wherein the second connected graph comprises a first node of the first pair of nodes and excludes a second node of the first pair of nodes, wherein a first node degree for the first node and a second node degree for the second node are below a node degree threshold;
traversing the first connected graph starting from the first node and ending on a third node of a second pair of nodes adjacent to one another on the first connected graph, the traversing the first connected graph identifying a subsequent graph path of the set of subsequent graph paths, wherein the second connected graph comprises the third node and excludes a fourth node of the second pair of nodes, wherein a third node degree for the third node and a fourth node degree for the fourth node are below the node degree threshold; and
updating the second connected graph using the subsequent graph path.

5. The method of claim 4, wherein the subsequent graph path comprises the first node, the third node, and a non-repetitive subset of the set of nodes linked by a non-repetitive subset of the first set of edges, wherein the second connected graph excludes the non-repetitive subset of the set of nodes prior to being updated using the subsequent graph path.

6. The method of claim 4, wherein identification of the subsequent graph path comprises an outward traversal stage followed by an inward traversal stage.

7. The method of claim 1, wherein the expanded second connected graph further comprises a second set of edges, wherein the second set of edges is a subset of the first set of edges.

8. The method of claim 1, wherein the second connected graph is bi-connected.

9. A non-transitory computer readable medium, CRM, comprising computer readable program code, which when executed by a computer processor, enables the computer processor to perform the method of at least one preceding claim.

10. A network device (104) configured to perform the method of at least one of claims 1 to 8.

## Patentansprüche

1. Verfahren zum Berechnen einer Flutungstopologie (200) eines Netzwerks, umfassend:
Erhalten (Schritt 300), durch eine Netzwerkvorrichtung (104) des Netzwerks, eines ersten verbundenen Graphen, der eine Topologie des Netzwerks darstellt, wobei der erste verbundene Graph eine Menge von Knoten umfasst, die durch eine erste Menge von Kanten miteinander verbunden sind;
Auswählen (Schritt 302), durch eine Netzwerkvorrichtung (104) des Netzwerks, aus der Menge von Knoten, eines Wurzelknotens, um einen zweiten verbundenen Graphen zu initialisieren, der die Flutungstopologie darstellt; und
Erweitern, durch eine Netzwerkvorrichtung (104) des Netzwerks, durch iteratives Durchlaufen des ersten verbundenen Graphen, des zweiten verbundenen Graphen unter Verwendung eines anfänglichen Graphzyklus (610) und einer Menge von nachfolgenden Graphpfaden (612), wobei das Erweitern des zweiten verbundenen Graphen weitergeführt wird, bis der zweite verbundene Graph die Menge von Knoten umfasst, wobei der anfängliche Graphzyklus einen Pfad darstellt, der aus einer Teilmenge der Menge von Knoten gebildet wird, die durch eine Teilmenge der ersten Menge von Kanten miteinander verbunden sind, und jeder nachfolgende Graphpfad einen anderen Pfad darstellt, der aus einer Teilmenge der Menge von Knoten gebildet wird, die durch eine Teilmenge der ersten Menge von Kanten miteinander verbunden sind,
wobei Erweitern des zweiten verbundenen Graphen Folgendes umfasst:
Durchlaufen des ersten verbundenen Graphen, um den anfänglichen Graphzyklus (610) zu identifizieren, wobei das Durchlaufen des ersten verbundenen Graphen am Wurzelknoten beginnt und am Wurzelknoten endet, wobei Identifikation des anfänglichen Graphzyklus (610) eine nach außen verlaufende Durchlaufphase umfasst, um einen nach außen verlaufenden Durchlaufpfad zu identifizieren, gefolgt von einer nach innen verlaufenden Durchlaufphase, um einen nach innen verlaufenden Durchlaufpfad zu identifizieren, wobei die nach außen verlaufende Durchlaufphase das Durchlaufen des ersten verbundenen Graphen, ausgehend vom Wurzelknoten und an einem Wendepunktknoten endend, unter Verwendung eines Tiefensuchen-, DFS-, Algorithmus, bis eine Schwellentiefe erreicht ist, umfasst, und wobei die nach innen verlaufende Durchlaufphase das Durchlaufen des ersten verbundenen Graphen, ausgehend vom Wendepunktknoten und am Wurzelknoten endend, unter Verwendung eines Breitensuchen-, BFS-, Algorithmus, umfasst, und wobei der anfängliche Graphzyklus durch den nach außen verlaufenden Durchlaufpfad und den nach innen verlaufenden Durchlaufpfad definiert wird;
Identifizieren jedes nachfolgenden Graphpfads (612); und
Aktualisieren des zweiten verbundenen Graphen unter Verwendung des anfänglichen Graphzyklus (610) und jedes nachfolgenden Graphpfads (612), um eine Teilmenge von Knoten und eine Teilmenge von Kanten zum zweiten verbundenen Graphen iterativ hinzuzufügen.

2. Verfahren nach Anspruch 1, wobei die Auswahl des Wurzelknotens aus der Menge von Knoten auf einer Knotenstufe eines gegebenen Knotens basiert, wobei eine Knotenstufe des Wurzelknotens über der Menge von Knoten des ersten verbundenen Graphen die größte ist.

3. Verfahren nach Anspruch 1, wobei der anfängliche Graphzyklus den Wurzelknoten und eine sich nicht wiederholende Teilmenge der Menge von Knoten umfasst, die durch eine sich nicht wiederholende Teilmenge der ersten Menge von Kanten verbunden sind, wobei der zweite verbundene Graph die sich nicht wiederholende Teilmenge der Menge von Knoten vor dessen Aktualisierung unter Verwendung des anfänglichen Graphzyklus ausschließt.

4. Verfahren nach Anspruch 1, wobei Erweitern des zweiten verbundenen Graphen weiter Folgendes umfasst:
Identifizieren eines ersten Paars von zueinander benachbarten Knoten auf dem ersten verbundenen Graphen, wobei der zweite verbundene Graph einen ersten Knoten des ersten Paars von Knoten umfasst und einen zweiten Knoten des ersten Paars von Knoten ausschließt, wobei eine erste Knotenstufe für den ersten Knoten und eine zweite Knotenstufe für den zweiten Knoten unter einer Knotenstufenschwelle liegen;
Durchlaufen des ersten verbundenen Graphen, beginnend am ersten Knoten und an einem dritten Knoten eines zweiten Paars von zueinander benachbarten Knoten auf dem ersten verbundenen Graphen endend, wobei das Durchlaufen des ersten verbundenen Graphen einen nachfolgenden Graphpfad der Menge von nachfolgenden Graphpfaden identifiziert, wobei der zweite verbundene Graph einen dritten Knoten umfasst und einen vierten Knoten des zweiten Paars von Knoten ausschließt, wobei eine dritte Knotenstufe für den dritten Knoten und eine vierte Knotenstufe für den vierten Knoten unter der Knotenstufenschwelle liegen; und
Aktualisieren des zweiten verbundenen Graphen unter Verwendung des nachfolgenden Graphpfads.

5. Verfahren nach Anspruch 4, wobei der nachfolgende Graphpfad den ersten Knoten, den dritten Knoten und eine sich nicht wiederholende Teilmenge der Menge von Knoten umfasst, die durch eine sich nicht wiederholende Teilmenge der ersten Menge von Kanten verbunden sind, wobei der zweite verbundene Graph die sich nicht wiederholende Teilmenge der Menge von Knoten vor dessen Aktualisierung unter Verwendung des nachfolgenden Graphpfads ausschließt.

6. Verfahren nach Anspruch 4, wobei die Identifikation des nachfolgenden Graphpfads eine nach außen verlaufende Durchlaufphase, gefolgt von einer innen verlaufenden Durchlaufphase umfasst.

7. Verfahren nach Anspruch 1, wobei der erweiterte zweite verbundene Graph weiter eine zweite Menge von Kanten umfasst, wobei die zweite Menge von Kanten eine Teilmenge der ersten Menge von Kanten ist.

8. Verfahren nach Anspruch 1, wobei der zweite verbundene Graph beidseitig verbunden ist.

9. Nichtflüchtiges computerlesbares Medium, CRM, das computerlesbaren Programmcode umfasst, der, wenn er von einem Computerprozessor ausgeführt wird, es dem Computerprozessor ermöglicht, das Verfahren nach mindestens einem vorstehenden Anspruch durchzuführen.

10. Netzwerkvorrichtung (104), die konfiguriert ist, um das Verfahren nach einem der Ansprüche 1 bis 8 durchzuführen.

## Revendications

1. Procédé pour le calcul d'une topologie d'inondation (200) d'un réseau, comprenant :
l'obtention (étape 300), par un dispositif de réseau (104) du réseau, d'un premier graphe connecté représentant une topologie du réseau, le premier graphe connecté comprenant un ensemble de nœuds interconnectés par un premier ensemble d'arêtes ;
la sélection (étape 302), par un dispositif de réseau (104) du réseau, à partir de l'ensemble de nœuds, d'un nœud racine pour initialiser un deuxième graphe connecté représentant la topologie d'inondation ; et
l'extension, par un dispositif de réseau (104) du réseau, par parcours itératif du premier graphe connecté, du deuxième graphe connecté en utilisant un cycle de graphe initial (610) et un ensemble de chemins de graphe ultérieurs (612), l'extension du deuxième graphe connecté se poursuivant jusqu'à ce que le deuxième graphe connecté comprenne l'ensemble de nœuds, dans lequel le cycle de graphe initial représente un chemin formé à partir d'un sous-ensemble de l'ensemble de nœuds interconnectés par l'intermédiaire d'un sous-ensemble du premier ensemble d'arêtes, et chaque chemin de graphe ultérieur représente un autre chemin formé à partir d'un sous-ensemble de l'ensemble de nœuds interconnectés par l'intermédiaire d'un sous-ensemble du premier ensemble d'arêtes, dans lequel l'extension du deuxième graphe connecté comprend :
le parcours du premier graphe connecté pour identifier le cycle de graphe initial (610), le parcours du premier graphe connecté commençant au nœud racine et se terminant au nœud racine, dans lequel l'identification du cycle de graphe initial (610) comprend une étape de parcours vers l'extérieur pour identifier un chemin de parcours vers l'extérieur, suivie par une étape de parcours vers l'intérieur pour identifier un chemin de parcours vers l'intérieur, dans lequel l'étape de parcours vers l'extérieur comprend le parcours du premier graphe connecté, ayant pour origine le nœud racine et se terminant à un nœud d'inflexion, en utilisant un algorithme de recherche en profondeur d'abord, DFS, jusqu'à ce qu'une profondeur seuil soit atteinte, et
dans lequel l'étape de parcours vers l'intérieur comprend le parcours du premier graphe connecté, ayant pour origine le nœud d'inflexion et se terminant au nœud racine, en utilisant un algorithme de recherche en largeur d'abord, BFS, et dans lequel le cycle de graphe initial est défini par le chemin de parcours vers l'extérieur et le chemin de parcours vers l'intérieur ;
l'identification de chaque chemin de graphe ultérieur (612) ; et
la mise à jour du deuxième graphe connecté en utilisant le cycle de graphe initial (610) et de chaque chemin de graphe ultérieur (612) pour ajouter itérativement au deuxième graphe connecté un sous-ensemble de nœuds et un sous-ensemble d'arêtes.

2. Procédé selon la revendication 1, dans lequel la sélection du nœud racine parmi l'ensemble de nœuds est basée sur un degré de nœud d'un nœud donné, dans lequel un degré de nœud du nœud racine est le plus grand parmi l'ensemble de nœuds du premier graphe connecté.

3. Procédé selon la revendication 1, dans lequel le cycle de graphe initial comprend le nœud racine et un sous-ensemble non répétitif de l'ensemble de nœuds liés par un sous-ensemble non répétitif du premier ensemble d'arêtes, dans lequel le deuxième graphe connecté exclut le sous-ensemble non répétitif de l'ensemble de nœuds avant d'être mis à jour en utilisant le cycle de graphe initial.

4. Procédé selon la revendication 1, dans lequel l'extension du deuxième graphe connecté comprend en outre :
l'identification d'une première paire de nœuds adjacents l'un à l'autre sur le premier graphe connecté, dans lequel le deuxième graphe connecté comprend un premier nœud de la première paire de nœuds et exclut un deuxième nœud de la première paire de nœuds, dans lequel un premier degré de nœud pour le premier nœud et un deuxième degré de nœud pour le deuxième nœud sont inférieurs à un seuil de degré de nœud ;
le parcours du premier graphe connecté en partant du premier nœud et en terminant à un troisième nœud d'une deuxième paire de nœuds adjacents l'un à l'autre sur le premier graphe connecté, le parcours du premier graphe connecté identifiant un chemin de graphe ultérieur de l'ensemble de chemins de graphe ultérieurs, dans lequel le deuxième graphe connecté comprend le troisième nœud et exclut un quatrième nœud de la deuxième paire de nœuds, dans lequel un troisième degré de nœud pour le troisième nœud et un quatrième degré de nœud pour le quatrième nœud sont inférieurs au seuil de degré de nœud ; et
la mise à jour du deuxième graphe connecté en utilisant le chemin de graphe ultérieur.

5. Procédé selon la revendication 4, dans lequel le chemin de graphe ultérieur comprend le premier nœud, le troisième nœud, et un sous-ensemble non répétitif de l'ensemble de nœuds liés par un sous-ensemble non répétitif du premier ensemble d'arêtes, dans lequel le deuxième graphe connecté exclut le sous-ensemble non répétitif de l'ensemble de nœuds avant d'être mis à jour en utilisant le chemin de graphe ultérieur.

6. Procédé selon la revendication 4, dans lequel l'identification du chemin de graphe ultérieur comprend une étape de parcours vers l'extérieur suivie d'une étape de parcours vers l'intérieur.

7. Procédé selon la revendication 1, dans lequel le deuxième graphe connecté étendu comprend en outre un deuxième ensemble d'arêtes, dans lequel le deuxième ensemble d'arêtes est un sous-ensemble du premier ensemble d'arêtes.

8. Procédé selon la revendication 1, dans lequel le deuxième graphe connecté est biconnecté.

9. Support lisible par ordinateur, CRM, non transitoire comprenant un code de programme lisible par ordinateur qui, lorsqu'il est mis en œuvre par un processeur informatique, permet au processeur informatique de réaliser le procédé selon au moins une revendication précédente.

10. Dispositif de réseau (104) configuré pour réaliser le procédé selon au moins une des revendications 1 à 8.
